(19) Europäisches Patentamt
European Patent Office
Office européen des brevets

(11) Publication number: **0 004 877**
**B1**

(12) **EUROPEAN PATENT SPECIFICATION**

(45) Date of publication of patent specification: **12.05.82**

(51) Int. Cl.³: **C 08 G 79/02**

(21) Application number: **79100883.2**

(22) Date of filing: **23.03.79**

# (54) A process for thermally polymerizing cyclic phosphazenes.

(30) Priority: **20.04.78 US 898007**

(43) Date of publication of application:
**31.10.79 Bulletin 79/22**

(45) Publication of the grant of the patent:
**12.05.82 Bulletin 82/19**

(84) Designated Contracting States:
**BE DE FR GB IT NL SE**

(56) References cited:
**DE - A - 2 754 245**
**DE - A - 2 816 227**
**GB - A - 1 506 834**
**GB - A - 1 506 835**

(73) Proprietor: **THE FIRESTONE TIRE & RUBBER COMPANY**
**1200 Firestone Parkway**
**Akron, Ohio 44317 (US)**

(72) Inventor: **Snyder, Dennis LaVerne**
**Route No. 1 Atwood Glenns**
**Mineral City Ohio 44656 (US)**
Inventor: **Kang, Jung Wong**
**6150 Terrace Hills Drive**
**Clinton Ohio 44216 (US)**
Inventor: **Fieldhouse, John William**
**2454 Sunny Brook Road**
**Mogadore Ohio 44260 (US)**

(74) Representative: **Kraus, Walter, Dr. et al,**
**Patentanwälte Dres. Kraus & Weisert**
**Irmgardstrasse 15**
**D-8000 München 71 (DE)**

**EP 0 004 877 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A process for thermally polymerizing cyclic phosphazenes

This invention relates to a process for thermally polymerizing cyclic phosphazenes represented by the general formula $(NPHal_2)_n$ in which Hal is a halogen selected from Cl, F and Br and n is an integer from 3 to 7 comprising heating said cyclic phosphazenes to a temperature in the range between 150 and 300°C to produce a linear polydihalophosphazene wherein the degree of polymerization is between 20 and 50,000.

More particularly, the invention relates to the use of suitable catalysts in order to improve the above polymerization by increasing the rate of polymerization, while decreasing or entirely eliminating the formation of gel and by permitting better control of the molecular weight and other physical properties of the polymer produced.

Thermal polymerization of $(NPCl_2)_n$ where n is a small integer such as 3 or 4 are described in US—A 3,370,020, US—A 3,515,688 and elsewhere in the literature. GB—A 1,506,835 describes a process for polymerizing cyclic $(NPCl_2)_n$ which comprises heating the polydichlorophosphazene in the presence of a catalyst comprising a Lewis acid to produce a substantially linear $(NPCl_2)_m$ polymer.

In scaling-up such methods of thermal polymerization from laboratory size glass apparatus to pilot plant and semiworks installations, the polymerization vessels have been fabricated from stainless steels because of the relatively high temperatures utilized in the polymerization.

An undesired consequence of the use of stainless steel equipment has been the contamination of the polymerization mixture with small amounts of metals such as chromium, nickel and iron which have significant but unpredictable effects on the manner in which the polymerization proceeds. Owing to the corrosive nature of some of the materials present, this effect is accentuated by higher temperatures. It has been found that results of polymerizations in stainless steel reactors are different from results of polymerizations in glass and that gelation of the linear polydichlorophosphazene polymer products becomes a serious problem in stainless steel equipment.

Consequently much effort has been directed toward effecting the polymerization of cyclic dichlorophosphazenes at lower temperatures than those described in the prior art, since the use of glass-lined equipment is more feasible at lower temperatures. The use of glass-lined equipment is generally considered practical at temperatures up to about 205°C.

An object of this invention is to conduct a catalyzed polymerization of cyclic dichlorophosphazene oligomers at temperatures well below 205°C and preferably as low as 170°C so that such polymerizations can be effected in glass-lined equipment instead of in stainless steel reaction vessels and to prepare linear polydichlorophosphazene polymers having relatively low dilute solution viscosities in high yields from trimer, tetramer and other low molecular weight cyclic oligomers of $NPCl_2$.

The catalyzed polymerizations of dichlorophosphazene oligomers in stainless steel reactors should be conducted without the formation of any substantial gelled product.

This object is accomplished by the invention by conducting said heating to thermally polymerize said cyclic phosphazene in the presence of a catalytically effective amount of a catalyst-compound of a transition metal selected from the group consisting of Ti, Zr, Hf, V, Nb, Ta, Cr, Mo and W.

According to a preferred embodiment of the present invention the amount of catalyst present is between 0.1 millimoles and 20.0 millimoles/mole of cyclic phosphazene.

According to the present invention it has been found that the desired polymerization of cyclic dichlorophosphazenes to linear polydichlorophosphazenes can be effected at lower temperatures and at a more rapid rate by the use of catalyst compounds of Ti, Zr, Hf, V, Nb, Ta, Cr, Mo or W. It has also been found that the catalyzed polymerizations in glass or in stainless steel vessels proceed without the formation of gel, and that the molecular weight of the product can be controlled conveniently by varying the concentration of catalyst. It has further been found that some control over the molecular weight distribution of the resulting polymer can be achieved by incremental addition of the catalyst and/or of the cyclic oligomers to the polymerization apparatus.

Catalysts suitable for the present invention are generally produced by preparing suitable compounds of one or more transition elements of Groups IV, V or VI, particularly metal halides, metal hydrides or metal alkyls of the transition element. It appears that transition elements which form compounds with incomplete d-shells and are in the lower valence states can associate metal alkyls to form complexes with highly polarized bonds.

Particularly preferred catalysts for the present invention are compounds of Ti, Zr, Hf, V, Nb, Ta, Cr, Mo and W wherein at least some of the metal is present in a valence state of 3 or below, or is associated with a sufficient amount of a reducing agent, capable of lowering the valence of such metal to the lower valence state. Metals, metal hydrides, metal alkyls or aryls and Grignard reagents are examples of the reducing agents which may be present to lower the valence of the transition metal in the compound which is to act as a catalyst.

The transition metal compounds which serve as catalysts or from which the catalyst is prepared may be inorganic compounds such as a halide, oxyhalide, or other complex halide, or oxide or may be organic compounds such as an alcoholate, acetate or phenolate.

The following compounds are illustrative of preferred catalysts which may be used in the practice of the present invention.

Metal halogen compounds of metals of Groups IVB, VB, and VIB of the Periodic Table represented by the formula M'Y'c in which c is the valence of the metal M; and Y is anionic, e.g. a halogen such as chlorine. Particularly preferred metals are titanium, zirconium, vanadium and chromium. $TiCl_3$, $TiCl_4$, $ZrCl_4$, $VCl_5$ and $CrCl_3$ are such compounds.

Ziegler type catalysts, i.e. combinations of such compounds with organometallic compounds of aluminum or boron represented by the formula $R_aMX_b$ in which M is either Al or B having a valence of a+b; X is anionic, e.g. a halogen such as chlorine and R is a hydrocarbon selected from the group consisting of alkyl, aryl, cycloalkyl, alkaryl and arylalkyl.

The invention will be more fully understood from the Examples which follow and which are intended to illustrate and not to limit the invention.

Twenty (20) grams of cyclic trimer $(NPCl_2)_3$ and the indicated additive were charged into small, clean, dry, glass tubes in a dry box. The tubes were then evacuated to a vacuum of 0.1 mm Hg (=0.1×0.00133322 bars) or less and sealed while connected to the vacuum line. The sealed tubes and their contents were placed in a forced air oven maintained at the desired temperature and polymerized for the times shown in Table I. The polymerizates are then removed from the glass tubes and unreacted trimer was removed by sublimation. Unsublimed material is the polymer which can then be dissolved in benzene or toluene and reacted with alkoxides as described in US—A—Patents 3,370,020 or 3,515,688 noted above. A control without the additive was also run at the same time.

Tables I and II illustrate the results obtained with different starting materials.

Table I

| | Additive | Amount | Time Hrs. | Temperature | Percent Polymer |
|---|---|---|---|---|---|
| 1A | None | None | 24 | 250°C | 46 |
| 1B | $TiCl_4$ (Neat) | .04 ml | 22.5 | 250°C | 90 |
| 2A | None | None | 32.6 | 250°C | 21.9 |
| 2B | $ZrCl_4$ | .29 g | 8.75 | 228°C | 82 |

Table II

| Catalyst | g Catalyst/ g Trimer | Polymerization T°C | Hrs. | % Conversion | DSV |
|---|---|---|---|---|---|
| 1. $ZrCl_4$ | 0.0033 | 270 | 4 | 89 | 0.31 |
| 2. $ZrCl_4$ | 0.0033 | 250 | 8 | 90 | 0.33 |
| 3. $ZrCl_4$ | 0.033 | 250 | 4 | 95 | 0.25 |
| 4. $ZrCl_4+BCl_3$ | 0.0067+0.005 | 200 | 10 | 90 | 0.16 |

As indicated in Table II above, catalysts may comprise the compounds of metals of Groups IVB, VB, and VIB of the Periodic Table or combinations of such catalysts with cocatalysts such as compounds of B or Al. This is further shown in the following table. The triethyl aluminum was used as 20% solution in toluene, and the vanadium acetylacetonate as a 0.1 molar solution.

Table III

| Catalyst | Amount Catalyst/20 g Trimer | Polymerization T°C | Hrs. | % Conversion | DSV |
|---|---|---|---|---|---|
| 1. None | — | 220 | 30.0 | 9.2 | 2.46 |
| 2. $TiCl_3$ | 0.1 g | 220 | 12.0 | 28.9 | 0.74 |
| 3. $TiCl_3+Et_3Al$ | 0.1 g+3 drops 20% soln* | 220 | 12.0 | 50.0 | 0.23 |
| 4. $Ti(OBu)_4+Et_3Al$ | 3 drops+6 drops 20% soln* | 220 | 12.0 | 30.7 | 0.52 |
| 5. $CrO_2Cl_2+Et_3Al$ | 3 drops+12 drops 20% soln* | 220 | 19.5 | 49.7 | 0.58 |
| 6. Vacac**+$Et_3Al$ | 4 drops 0.1 M soln.+4 drops 20% soln* | 220 | 21.0 | 71.0 | 0.31 |
| 7. $CrO_2Cl_2+Et_3Al$ | 0.08 mM+0.0134 mM*** | 170 | 90.0 | 26.2 | N.D.**** |

*$Et_3Al$ in toluene
**acac=acetylacetonate
***mM=Millimoles
****Not Determined

The product can be recovered in any of several ways. A preferred method is to permit the reactor to cool sufficiently whereupon the polydichlorophosphazene can be dissolved in a solvent or solvent mixture and the product can be flushed out of the reactor.

Although the invention has been described with specific reference to dichlorophosphazenes it is also applicable to the polymerization of dibromophosphazene and difluorophosphazene oligomers.

**Claims**

1. A process for thermally polymerizing cyclic phosphazenes represented by the general formula $(NPHal_2)_n$ in which Hal is a halogen selected from the group consisting of Cl, F and Br and n is an integer from 3 to 7 comprising heating said cyclic phosphazenes to a temperature in the range between 150 and 300°C to produce a linear polydihalophosphazene wherein the degree of polymerization is between 20 and 50,000, characterized by conducting said heating to thermally polymerize said cyclic phosphazene in the presence of a catalytically effective amount of a catalyst-compound of a transition metal selected from the group consisting of Ti, Zr, Hf, V, Nb, Ta, Cr, Mo and W.

2. The process of claim 1 wherein Hal is Cl and n is 3, 4 or mixtures of 3 and 4.

3. The process of claim 1 wherein the catalyst includes a cocatalyst which is a compound of Al or B.

4. The process of claim 1 in which the amount of catalyst present is between 0.1 millimoles and 20.0 millimoles/mole of cyclic phosphazene.

5. The process of claim 1 in which the catalyst is a metal halogen compound.

6. The process of claim 1 in which the catalyst is a Ti compound.

7. The process of claim 1 in which the catalyst is $TiCl_3$ or $TiCl_4$.

8. The process of claim 1 in which the catalyst is $ZrCl_4$.

9. The process of claim 1 in which a cocatalyst is present in addition to the catalyst and the cocatalyst is an organometallic compound $R_aAlX_b$, in which R is alkyl, aryl, cycloalkyl, arylalkyl or alkylaryl and a and b are small integers totalling the valence of Al and X is anionic.

10. The process of claim 1 in which the catalyst further contains an aluminum alkyl compound.

**Patentansprüche**

1. Verfahren zur thermischen Polymerisation von cyclischen Phosphazenen der allgemeinen Formel $(NPHal_2)_n$, worin Hal für Halogen aus der Gruppe Cl, F und Br steht und n eine ganze Zahl von 3 bis 7 ist, durch Erhitzen der cyclischen Phosphazene auf eine Temperatur im Bereich zwischen 150 und 300°C, um ein lineares Polydihalogenphosphazen zu erzeugen, bei dem der Polymerisationsgrad zwischen 20 und 50000 ist, dadurch gekennzeichnet, daß man das zur thermischen Polymerisation des cyclischen Phosphazens durchgeführte Erhitzen in Gegenwart einer katalytisch wirksamen Menge einer Katalysatorverbindung eines Übergangsmetalls, ausgewählt aus der Gruppe Ti, Zr, Hf, V, Nb, Ta, Cr, Mo und W, vornimmt.

2. Verfahren nach Anspruch 1, dadurch gekennzeichnet, daß Hal für Cl steht und n 3, 4 oder Gemische von 3 und 4 bedeutet.

3. Verfharen nach Anspruch 1, dadurch gekennzeichnet, daß der Katalysator einen Cokatalysator, der eine Verbindung von Al oder B ist, einschließt.

4. Verfahren nach Anspruch 1, dadurch gekennzeichnet, daß die vorhandene Menge des Katalysators zwischen 0,1 mMol und 20,0 mMol/Mol des cyclischen Phosphazens liegt.

5. Verfahren nach Anspruch 1, dadurch gekennzeichnet, daß der Katalysator ein Metallhalogenverbindung ist.

6. Verfahren nach Anspruch 1, dadurch gekennzeichnet, daß der Katalysator eine Ti-Verbindung ist.

7. Verfahren nach Anspruch 1, dadurch gekennzeichnet, daß der Katalysator $TiCl_3$ oder $TiCl_4$ ist.

8. Verfahren nach Anspruch 1, dadurch gekennzeichnet, daß der Katalysator $ZrCl_4$ ist.

9. Verfahren nach Anspruch 1, dadurch gekennzeichnet, daß zusätzlich zu dem Katalysator ein Cokatalysator vorhanden ist, und daß der Cokatalysator eine Organometallverbindung $R_aAlX_b$ ist, wobei R für Alkyl, Aryl, Cycloalkyl, Arylalkyl oder Alkylaryl steht und a und b kleine ganze Zahlen sind, die insgesamt die Wertigkeit von Al betragen, und daß X anionisch ist.

10. Verfahren nach Anspruch 1, dadurch gekennzeichnet, daß der Katalysator weiterhin eine Aluminiumalkylverbindung enthält.

**Revendications**

1. Procédé pour polymériser thermiquement des phosphazènes cycliques représentés par la formule générale ci-après:

$$(NPHal_2)_n$$

dans laquelle:

Hal est une atome d'halogène choisi dans le groupe formé par les atomes de Cl, F et Br, et

n est un nombre entier compris entre 3 et 7 inclus, selon lequel on chauffe ces phosphazènes cycliques à une température comprise entre 150 et 300°C, afin de produire un polydihalophosphazène linéaire dont le degré de polymérisation est compris entre 20 et 50,000, caractérisé en ce qu'on effectue ce chauffage en vue de polymériser thermiquement le phosphazène cyclique, en présence d'une quantité catalytiquement efficace, d'un composé catalyseur d'un métal de transition choisi dans le groupe comprenant Ti, Zr, Hf, V, Nb, Ta, Cr, Mo et W.

2. Procédé selon la Revendication 1, caractérisé en ce que Hal représente un atome de chlore, et n est égal à 3, 4 ou à des mélanges de 3 et 4.

3. Procédé selon la Revendication 1, caractérisé en ce que le catalyseur comprend un cocatalyseur qui est un composé du B ou de l'Al.

4. Procédé selon la Revendication 1, caractérisé en ce que la quantité de catalyseur présent est comprise entre 0,1 et 20,0 millimoles/mole de phosphazène cyclique.

5. Procédé selon la Revendication 1, caractérisé en ce que le catalyseur est un composé halométallique.

6. Procédé selon la Revendication 1, caractérisé en ce que le catalyseur est un composé du Ti (titane).

7. Procédé selon la Revendication 1, caractérisé en ce que le catalyseur est constitué par du $TiCl_3$ ou du $TiCl_4$.

8. Procédé selon la Revendication 1, caractérisé en ce que le catalyseur est constitué par du $ZrCl_4$.

9. Procédé selon la Revendication 1, caractérisé en ce qu'en plus du catalyseur, il y a un cocatalyseur et que celui-ci est un composé organométallique représenté par la formule générale:

$$RaAlX_b$$

dans laquelle:

R est un radical alkyle, aryle, cycloalkyle, arylalkyle ou alkylaryle,

a et b sont des nombres entiers dont la somme est égale à la valence de Al, et

X est un anion.

10. Procédé selon la Revendication 1, caractérisé en ce que le catalyseur contient de plus, un composé d'alkylaluminium.